# EUROPÄISCHE PATENTSCHRIFT

(11) **EP 4 018 277 B1**
(45) Veröffentlichungstag und Bekanntmachung des Hinweises auf die Patenterteilung: **25.10.2023**
(21) Anmeldenummer: 20780963.3
(22) Anmeldetag: 16.09.2020
(51) Int. Cl.: G05B 23/02

(54) **EREIGNISORIENTIERTE ÜBERTRAGUNG VON PROZESSMESSWERTEN**
EVENT-ORIENTED TRANSMISSION OF PROCESS MEASUREMENT VALUES
TRANSMISSION DES VALEURS MESURÉES DE PROCESSUS ORIENTÉE ÉVÉNEMENTS

(30) Priorität: 24.09.2019 EP 19199271
(43) Veröffentlichungstag der Anmeldung: 29.06.2022
(73) Patentinhaber: Siemens Aktiengesellschaft, 80333 München (DE)
(72) Erfinder: KLUGE, Georg, 76351 Linkenheim (DE); LUTZ, Benjamin, 76327 Pfinztal (DE)
(74) Vertreter: Siemens Patent Attorneys
(86) Internationale Anmeldenummer: PCT/EP2020/075822
(87) Internationale Veröffentlichungsnummer: WO 2021/058345

(56) Entgegenhaltungen:
- EP-A1- 3 354 419

## Beschreibung

Die Erfindung betrifft ein Verfahren zur ereignisorientierten Übertragung von Prozessmesswerten von wenigstens einem Messgerät eines Leitsystems einer Prozessanlage zu einem Operator Station Server des Leitsystems der Prozessanlage mit den Merkmalen des Anspruchs 1. Außerdem betrifft die Erfindung ein Automatisierungsgerät gemäß Anspruch 2. Außerdem betrifft die Erfindung ein Leitsystem einer Prozessanlage gemäß Anspruch 3.

Prozessdaten in der Prozessautomatisierung sind in der Regel relativ "träge". Dementsprechend findet die Übertragung von Prozessdaten zwischen Automatisierungen und Operator Station Servern (für die Bedienung und Beobachtung, Archivierung, usw.) in der Regel ereignisgesteuert und nicht zeitgesteuert (zyklisch) statt. Ziel ist es hierbei, das Übertragungsaufkommen zu reduzieren, da insbesondere bei verfahrenstechnischen Anlagen große Mengen an Prozessdaten (im Weiteren als "Prozessmesswerte" bezeichnet) anfallen.

Bei der ereignisgesteuerten Übertragung kommt ein "Ausdünnen" der Prozessmesswerte zur Anwendung. Dies bedeutet, dass Prozessmesswerte nur bei
- einer hinreichend großen Änderung,
- nach Ablauf eines oberen Timeouts (definiert die minimale Übertragungsrate), und
- bei hinreichend großen akkumulierten Änderungen übertragen werden.

Um bei starken Signaländerungen (z.B. durch verstärktes Rauschen, Ausfall von Sensorik...) die Menge an Prozessmesswerten bei der ereignisgesteuerten Übertragung zu deckeln, wird in der Regel noch ein unterer Timeout definiert (maximale Übertragungsrate). Die Aufgabe besteht darin, zwischen dem oberem und unterem Timeout die Übertragung von Prozessmesswerten so auszudünnen, dass
- immer noch hinreichend genug Stützstellen für die Reproduktion des Verlaufs der Prozessdaten (Trends) vorhanden sind,
- wichtige Ereignisse nicht verloren gehen (z.B. der Zeitpunkt, ab dem der Prozesswert sich ändert)
- möglichst wenig / keine überflüssigen Prozessdaten übertragen werden.

Für die ereignisorientierte Übertragung haben sich verschiedene Verfahren etabliert, welche jedoch einige Nachteile mit sich. Der Hauptnachteil liegt darin, dass eine spezifische Konfiguration der ereignisorientierten Übertragung für jeden Prozessmesswert erfolgen muss. Der Projekteur muss quasi für jede Messstelle den genauen Messbereich, die zu erwartende Änderungsdynamik des verfahrenstechnischen Prozesses, usw. kennen, um ein akzeptables Übertragungsverhalten erzielen zu können. Dies bringt einen enormen und iterativen Aufwand mit sich.

Auch etablierte Verfahren, die weniger Konfiguration benötigen, wie sie beispielsweise zur Reduktion von verfahrenstechnischen Archivdaten zur Anwendung kommen (Boxcar, SLIM, Swinging Door) können bei der Übertragung nur bedingt zur Anwendung kommen, da bei diesen Verfahren beim Verlassen von Toleranzbändern keine aktuellen Werte, sondern vergangene Werte übertragen werden. In diesem Fall würden die Operatoren dann bei der Bedienung und Beobachtung mit (Alt-)Werten arbeiten.

In der EP 3 354 419 A1 sind ein Verfahren und eine Vorrichtung zur Erfassung von Betriebsdaten einer industriellen Roboteranwendung offenbart.

Der Erfindung liegt die Aufgabe zugrunde, ein Verfahren und ein dazugehöriges Automatisierungsgerät anzugeben, die eine Konfiguration einer ereignisorientierten Übertragung von einem Messgerät zu einem Leitsystem einer technischen Anlage maßgeblich vereinfachen.

Die zuvor formulierte Aufgabe wird durch ein Verfahren zur ereignisorientierten Übertragung von Prozessmesswerten von wenigstens einem Messgerät einer Prozessanlage zu einem Operator Station Server eines Leitsystems einer Prozessanlage mit den Merkmalen des Anspruchs 1 gelöst.

Das erfindungsgemäße Verfahren umfasst die folgenden Schritte:
a) Empfangen der Prozessmesswerte mittels eines Automatisiierungsgerätes des Leitsystems der Prozessanlage;
b) Automatische Verkleinerung eines Messbereichs der Prozessmesswerte durch das Automatisierungsgerät des Leitsystems der Prozessanlage mittels eines heuristischen Verfahrens im Zuge einer Sensibilisierung einer Änderungserkennung der Prozessmesswerte abhängig von einer Unterschreitung einer minimalen Übertragungsrate der Prozessmesswerte von dem Messgerät zu dem Automatisierungsgerät, und automatische Vergrößerung des Messbereichs der Prozessmesswerte durch das Automatisierungsgerät des Leitsystems der Prozessanlage im Zuge einer Desensibilisierung einer Änderungserkennung der Prozessmesswerte;
c) Ereignisorientierte Übertragung der Prozessmesswerte an den Operator Station Server des Leitsystems der Prozessanlage, wobei ein Ereignis eine vorbestimmte Änderung der Prozessmesswerte darstellt.

Bei der Prozessanlage kann es sich beispielsweise um eine chemische, pharmazeutische, petrochemische oder eine Anlage aus der Nahrungs- und Genussmittelindustrie handeln.

Diese Prozessanlagen verfügen jeweils über ein Leitsystem oder zumindest ein computerunterstütztes Modul zur Steuerung und Regelung des ablaufenden Prozesses. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozessnahe Komponenten, die zur Ansteuerung der Aktoren bzw. Sensoren dienen. Darüber hinaus weist das Leitsystem u.a. Mittel zur Visualisierung der Prozessanlage und zu einem Engineering auf. Unter dem Begriff Leitsystem sind zusätzlich auch weitere Recheneinheiten für komplexere Regelungen und Systeme zur Datenspeicherung und - verarbeitung zu fassen.

Unter einem "Operator Station Server" wird vorliegend ein Server verstanden, der zentral Daten eines Bedien- und Beobachtungssystems sowie in der Regel Alarm- und Messwertarchive eines Prozessleitsystems einer Prozessanlage erfasst und Benutzern zur Verfügung stellt. Der Operator Station Server stellt in der Regel eine Kommunikationsverbindung zu Automatisierungssystemen der Prozessanlage her und gibt Daten der Prozessanlage an sogenannte Clients weiter, die zur Bedienung und Beobachtung eines Betriebs der einzelnen Funktionselemente der Prozessanlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der Prozessanlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Messgerät ist entweder Erzeuger oder Empfänger eines oder mehrerer analoger oder binärer Signale. Beispiele für derartige Geräte sind Messumformer, binäre Sensoren oder Stellventile mit einem Stellungsregler.

Das erfindungsgemäße Verfahren kann die Konfiguration der ereignisorientierten Übertragung maßgeblich vereinfachen bzw. generalisieren, da durch die automatische Selbstsensibilisierung (und/oder Selbstdesensibilisierung) ein hoher Grad an Ausdünnung der Prozessmesswerte erreicht werden kann, wobei eine Reproduktion des Verlaufs nach der Übertragung möglich ist und wichtige Ereignisse nicht verloren gehen.

Der Messbereich der Prozessmesswerte wird durch das Automatisierungsgerät des Leitsystems der Prozessanlage mittels eines heuristischen Verfahrens im Zuge der Sensibilisierung der Änderungserkennung der Prozessmesswerte abhängig von einer Unterschreitung einer minimalen Übertragungsrate der Prozessmesswerte von dem Messgerät zu dem Automatisierungsgerät automatisch verkleinert. Im Zuge einer Desensibilisierung der Änderungserkennung der Prozessmesswerte wird der Messbereich der Prozessmesswerte durch das Automatisierungsgerät des Leitsystems der Prozessanlage automatisch vergrößert.

Die Konfiguration der ereignisorientierten Übertragung lässt sich dadurch auf das Festlegen einer minimalen/maximalen Übertragungsrate reduzieren - die Konfiguration des Messbereichs und eines Schwellwerts können entfallen. Die minimale/maximale Übertragungsrate ist auch bei etablierten Verfahren in der Regel eine feste Größe - die lediglich von einer Kategorie des Messgeräts abhängt (z.B. wird die maximale Übertragungsrate bei Drücken und Drehzahlen höher gewählt als bei Temperaturen und Durchflüssen).

Das heuristische Verfahren kann beispielsweise in einer Halbierung des Abstandes zwischen Prozessmesswert und oberer und unterer Grenze des Messbereichs liegen.

Die Aufgabe wird zudem gelöst durch ein Automatisierungsgerät, das dazu ausgebildet ist, ein Verfahren wie zuvor erläutert auszuführen. Unter einer Automatisierung wird die selbständige (automatisierte) Erfassung und Beeinflussung physikalischer Größen mithilfe technischer Mittel verstanden. Dabei werden in der Regel Maschinen, Anlagen oder sonstige Einrichtungen in die Lage versetzt, selbsttätig zu arbeiten. Automatisierungsgeräte werden dabei zur Realisierung einer Automatisierung benutzt und können beispielsweise speicherprogrammierbare Steuerungen sein, die eine übergeordnete Steuerungsfunktion für untergeordnete speicherprogrammierbare Steuerungen darstellen.

Außerdem wird die Aufgabe durch ein Leitsystem einer prozesstechnischen Anlage gelöst, die ein Automatisierungsgerät umfasst, welches dazu ausgebildet ist, ein Verfahren wie zuvor erläutert auszuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

Es zeigen:
- FIG 1: einen Verlauf eines gemäß dem Stand der Technik verarbeiteten Prozessmesswerts;
- FIG 2: einen weiteren Verlauf eines gemäß dem Stand der Technik verarbeiteten Prozessmesswerts;
- FIG 3: ein Prinzipbild eines erfindungsgemäßen Verfahrens;
- FIG 4: einen Verlauf eines gemäß einem erfindungsgemäßen Verfahren verarbeiteten Prozessmesswerts; und
- FIG 5: eine schematische Zeichnung eines Teils eines Leitsystems.

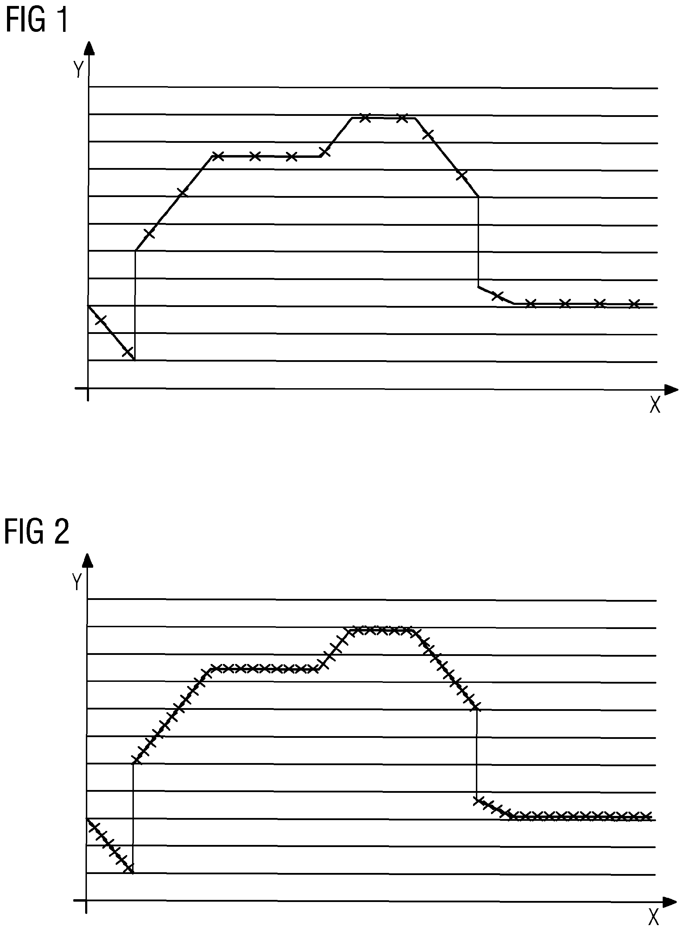

FIG 1 zeigt einen beispielhaften Verlauf eines Prozessmesswertes in einem XY-Diagramm mit beliebigen Einheiten. Der Prozessmesswert wird zyklisch in einem Automatisierungsgerät verarbeitet. Die Menge an Prozessmesswerten soll vor der Übertragung an einen Operator Station Server eines Leitsystems einer Prozessanlage ausgedünnt werden, um nicht jeden einzelnen Prozessmesswert übertragen zu müssen.

Es wird ein Verfahren der ereignisorientierten Übertragung gemäß dem Stand der Technik verwendet, das einen fest konfigurierten Messbereich, eine minimale und maximale Übertragungsrate sowie einen Schwellwert für die Hysterese einsetzt. In dem Verlauf gemäß FIG 1 sind die Prozessmesswerte mit Kreuzen gekennzeichnet, die durch das bekannte Verfahren für die Übertragung von dem Automatisierungsgerät zu dem Operator Station Server ausgewählt wurden. Zu erkennen ist, dass mit dem konfigurierten Messbereich mit starker Ausdünnung eine gute Reduktion erreicht wird. Eine Reproduktion des Prozessmesswertverlaufs ist jedoch ungenau, da bei wichtigen Ereignissen (Sprüngen und "Knicken") keine Prozessmesswerte übertragen werden.

Im Gegensatz zu FIG 1 wurde für denselben Verlauf von Prozessmesswerten in FIG 2 ein Messbereich mit einer geringen Ausdünnung gewählt, so dass eine Reproduktion genauer ist, da auch bei wichtigen Ereignissen (Sprüngen und "Knicken") Prozessmesswerte übertragen werden. Im Gegenzug wird jedoch nur eine geringe Reduktion bei der Übertragung der Prozessmesswerte von dem Automatisierungsgerät zu dem Operator Station Server erreicht - insbesondere in den Bereichen mit geringer Änderung werden deutlich mehr Prozessmesswerte übertragen als es notwendig wäre.

Entscheidend ist der Messbereich bei der Akkumulierung der Prozessmesswertänderungen seit der letzten Übertragung:
- Ist der Messbereich zu gering gewählt, wird zu schnell ackumuliert und dementsprechend auch zu viele Prozessmesswerte übertragen, was negative Auswirkungen auf die erzielbare Übertragungsrate mit sich bringt;
- Ist der Messbereich zu groß gewählt, wird zu langsam akkumuliert und dementsprechend wenige Prozessmesswerte übertragen, was negative Auswirkungen auf eine Reproduktion der Prozessmesswerte mit sich bringt.

Für eine optimale Konfiguration (Messbereich, minimale/maximale Übertragungsrate, Schwellwert) muss ein Projekteur der Prozessanlage Messstelle für Messstelle bzw. Messgerät für Messgerät die geeigneten Parameter einstellen. Zudem muss sich die Prozessanlage innerhalb der dafür konfigurierten Parameter bewegen. Ausnahmesituationen wie beispielsweise Inbetriebnahme von Sensoren, Ausfälle von Sensoren oder sonstige Störungen können somit nicht optimal Übertragen und durch Operatoren der Prozessanlage bearbeitet werden.

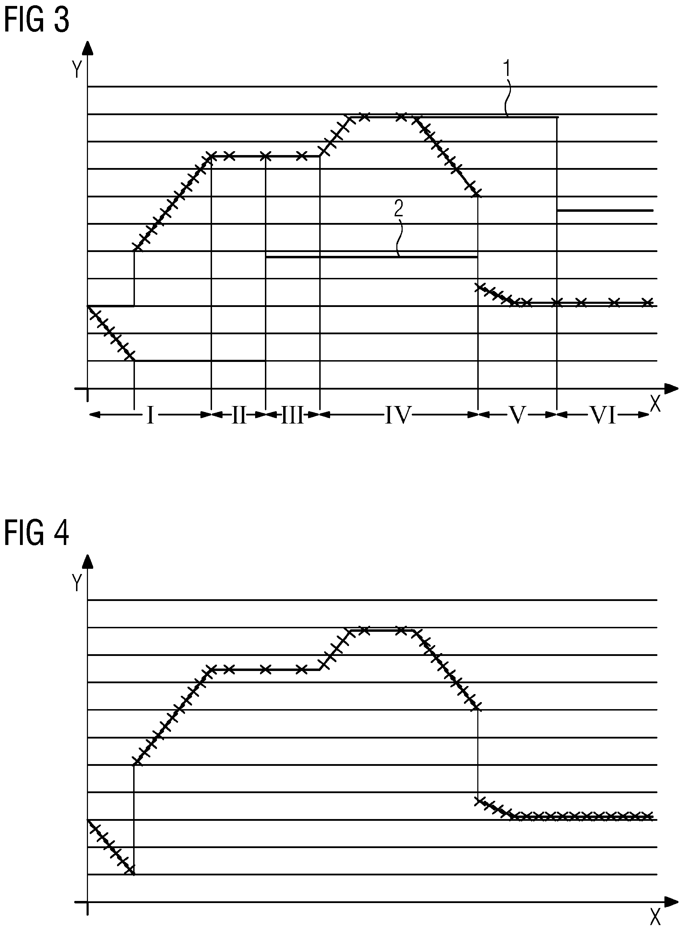

In FIG 3 wird das Prinzip des selbst sensibilisierenden und desensibilisierenden Messbereichs verdeutlicht. Dabei liegt derselbe Prozessmesswerteverlauf wie aus FIG 1 und FIG 2 zugrunde. Die für die Übertragung ausgewählten Prozessmesswerte sind mit einem Kreuz gekennzeichnet. Der Messbereich ist der jeweilige Abstand zwischen der ersten (in der Abbildung oberen) Kurve 1 und der zweiten (in der Abbildung unteren) Kurve 2.

Zu erkennen ist, dass sich der Messbereich über den Verlauf der Prozessmesswerte ändert:
Abschnitt I: Der Messbereich weitet sich dynamisch mit den in dem Bereich minimalen und maximalen Prozessmesswerten - dies führt zu einer Desensibilisierung der Änderungserkennung und somit zu einer Reduktion der Prozessdatenübertragung.
Abschnitt II: Der Prozessmesswerteverlauf hat ein stabiles Niveau erreicht - der Messbereich ist konstant. Deutlich weniger Prozessmesswerte werden übertragen.
Abschnitt III: Die minimale Übertragungsrate wurde durch die starke Desensibilisierung durch den großen Messbereich unterschritten - der Messbereich wird dynamisch verringert. Hierbei kommt ein heuristisches Verfahren zum Einsatz, bei dem der Abstand zwischen dem aktuellen Prozessmesswert und der oberen und unteren Grenze des Messbereichs halbiert wird. Dies wird vorliegend als Sensibilisierung bezeichnet. Die Prozessmesswerte werden nun wieder schneller gesendet und die Änderungserkennung ist wieder sensibler.
Abschnitt IV: Durch die vorherige Sensibilisierung wird eine Änderung der Prozessmesswerte unmittelbar erkannt und übertragen. Durch die Änderung der Prozessmesswerte wird der Messbereich wieder angepasst.
Abschnitt V: Durch die starke Änderung des Prozessmesswertes wird der Messbereich weiter vergrößert (desensibilisiert), bis durch Einpendeln des Prozesswertes auf einem Niveau die minimale Übertragungsrate wieder unterschritten wird;
Abschnitt VI: Der Messbereich ist auf das Niveau des Prozessmesswertes ist optimal eingestellt und wird nicht mehr verändert - es findet eine konstante Übertragung statt.

In FIG 4 ist der in FIG 1 und FIG 2 gezeigte Verlauf der Prozessmesswerte als durchgängige Linie dargestellt. Die gemäß dem anhand FIG 3 erläuterten Verfahren für eine Übertragung von dem Automatisierungsgerät zu dem Operator Station Server ausgewählten Prozessmesswerte sind durch Kreuze gekennzeichnet. Zu erkennen ist, dass insbesondere in den eingeschwungenen Niveaus des Prozessmesswertes eine sehr gute Reduktion bei der Übertragung erreicht werden kann. Dennoch ist es möglich, auf Ereignisse bei der Übertragung ad-hoc reagieren zu können. So werden beispielsweise Knicke, Sprünge und Steigungen durch die Übertragung exakt erfasst, so dass eine Reproduktion nach der Übertragung von dem Automatisierungsgerät an den Operator Station Server sehr gut möglich ist. Zu sehen ist darüber hinaus, wie sich die Übertragungsrate innerhalb der festgelegten Grenzen dynamisch anpasst.

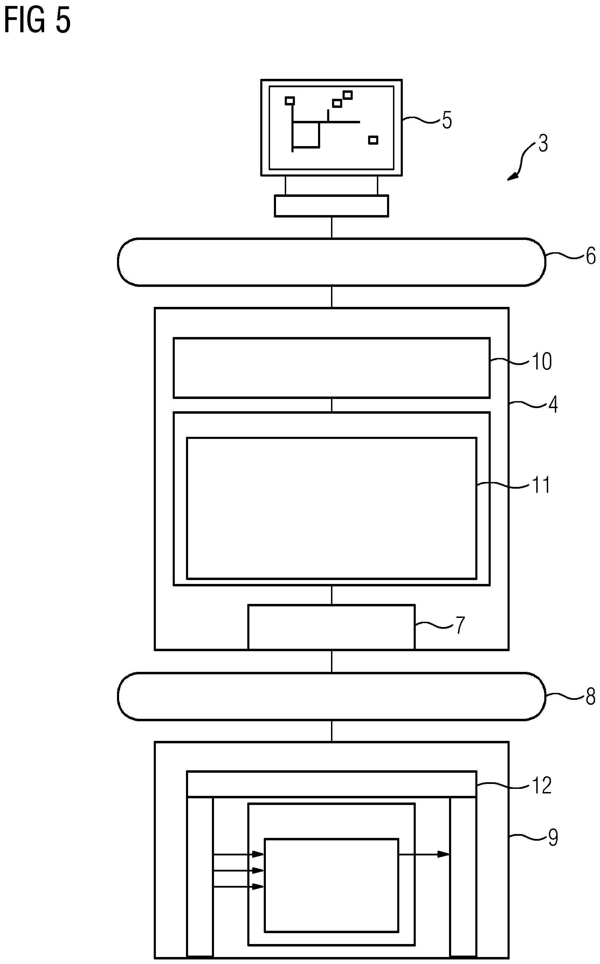

In FIG 5 ist ein Teil eines erfindungsgemäßen Leitsystems 3 einer Prozessanlage dargestellt. Das Leitsystem 3 umfasst einen Server eines Bediensystems bzw. einen Operator Station Server 4 und einen dazugehörigen Operator Station Client 5. Der Operator Station Server 4 und der Operator System Client 5 sind über einen Terminalbus 6 miteinander und mit nicht dargestellten weiteren Komponenten des Leitsystems 3 wie einem Engineering System Server oder einem Prozessdatenarchiv verbunden.

Ein Benutzer bzw. Operator hat mittels des Operator Station Clients 5 mittels des Terminalbus 6 im Kontext eines Bedienens und Beobachtens Zugriff auf den Operator Station Server 4. Der Terminalbus 6 kann, ohne sich darauf zu beschränken, beispielsweise als Industrial Ethernet ausgebildet sein.

Der Operator Station Server 4 weist eine Geräteschnittstelle 7 auf, die mit einem Anlagenbus 8 verbunden ist. Hierüber kann der Operator System Server 2 mit einem Automatisierungsgerät 9 des Leitsystems 3 kommunizieren. Der Anlagenbus 8 kann, ohne sich darauf zu beschränken, beispielsweise als Industrial Ethernet ausgebildet sein. Das Automatisierungsgerät 9 kann wiederum mit einer beliebigen Anzahl an Subsystemen (nicht dargestellt) verbunden sein.

In dem Operator Station Server 4 ist ein Visualisierungsdienst 10 integriert, über den eine Übertragung von (Visualisierungs-)Daten an den Operator Station Client 5 erfolgen kann. Zudem weist der Operator Station Server 4 ein Prozessabbild (Process Image) 11 der Prozessanlage auf.

In dem Automatisierungsgerät 9 ist ein sogenanntes EDC Framework 12 implementiert (Event Driven Communication), welches eine ereignisbasierte Übertragung von Prozessmesswerten von mit dem Automatisierungsgerät 9 verbundenen Messgeräten (nicht dargestellt) zu dem Operator Station Server 4 ermöglicht. Im Rahmen des EDC Frameworks 12 findet eine erfindungsgemäße Sensibilisierung und/oder Desensibilisierung eines Messbereichs der Prozessmesswerte statt, bevor die Prozessmesswerte an den Operator Station Server 4 übertragen werden. Dabei werden die aktuellen Prozessmesswerte in jedem Zyklus der Automatisierung der Prozessanlage durch das EDC Framework 12 analysiert. Die "Ausdünnung" der Prozessmesswerte bedingt zwar einen etwas höheren Rechenaufwand für das Automatisierungsgerät 9, welcher jedoch durch die Einsparung an Rechenaufwand bei der Übertragung der Prozessmesswerte zu dem Operator Station Server 4 vorteilhafterweise überkompensiert wird.

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur ereignisorientierten Übertragung von Prozessmesswerten von wenigstens einem Messgerät eines Leitsystems einer Prozessanlage zu einem Operator Station Server (4) des Leitsystems (3) der Prozessanlage, umfassend:
a) Empfangen der Prozessmesswerte mittels eines Automatisiierungsgerätes (9) des Leitsystems (3) der Prozessanlage;
b) Automatische Verkleinerung eines Messbereichs der Prozessmesswerte durch das Automatisierungsgerät (9) des Leitsystems (3) der Prozessanlage mittels eines heuristischen Verfahrens im Zuge einer Sensibilisierung einer Änderungserkennung der Prozessmesswerte abhängig von einer Unterschreitung einer minimalen Übertragungsrate der Prozessmesswerte von dem Messgerät zu dem Automatisierungsgerät (9), und automatische Vergrößerung des Messbereichs der Prozessmesswerte durch das Automatisierungsgerät (9) des Leitsystems (3) der Prozessanlage im Zuge einer Desensibilisierung einer Änderungserkennung der Prozessmesswerte;
c) Ereignisorientierte Übertragung der Prozessmesswerte an den Operator Station Server (4) des Leitsystems (3) der Prozessanlage, wobei ein Ereignis eine vorbestimmte Änderung der Prozessmesswerte darstellt.

2. Automatisierungsgerät (9), das dazu ausgebildet ist, ein Verfahren gemäß Anspruch 1 auszuführen.

3. Leitsystem (3) einer Prozessanlage, das ein Automatisierungsgerät (9) gemäß Anspruch 2 aufweist.

## Claims

1. Method for the event-oriented transmission of process measurement values from at least one measurement device of a control system of a process installation to an operator station server (4) of the control system (3) of the process installation, comprising:
a) receiving of the process measurement values by means of an automation device (9) of the control system (3) of the process installation;
b) automatic reduction of a measurement range of the process measurement values by way of the automation device (9) of the control system (3) of the process installation by means of a heuristic method as part of a sensitisation of a change recognition of the process measurement values as a function of a drop below a minimum transmission rate of the process measurement values from the measurement device to the automation device (9), and automatic increasing of the measurement range of the process measurement values by way of the automation device (9) of the control system (3) of the process installation as part of a desensitisation of a change recognition of the process measurement values;
c) event-oriented transmission of the process measurement values to the operator station server (4) of the control system (3) of the process installation, wherein an event represents a predetermined change of the process measurement values.

2. Automation device (9), which is embodied to carry out a method according to claim 1.

3. Control system (3) of a process installation, which has an automation device (9) according to claim 2.

## Revendications

1. Procédé de transmission orienté événements de valeurs de mesure de processus d'au moins un appareil de mesure d'un système de conduite d'une installation de processus à un Operator Station Server (4) du système (3) de conduite de l'installation de processus, comprenant :
a) réception des valeurs de mesure de processus au moyen d'un appareil (9) d'automatisation du système (3) de conduite de l'installation de processus ;
b) rapetissement automatique d'une plage de mesure des valeurs de mesure de processus par l'appareil (9) d'automatisation du système (3) de conduite de l'installation de processus au moyen d'un procédé heuristique au cours d'une sensibilisation d'une détection de variation des valeurs de mesure du processus en fonction d'un dépassement par le bas d'un taux minimum de transmission des valeurs de processus par l'appareil de mesure à l'appareil (9) d'automatisation et agrandissement automatique de la plage de mesure des valeurs de mesure de processus par l'appareil (9) d'automatisation du système (3) de conduite de l'installation de processus au cours d'une désensibilisation d'une détection de variation des valeurs de mesure de processus ;
c) transmission orientée événements des valeurs de mesure de processus à l'Operator Station Server (4) du système (3) de conduite de l'installation de processus, un événement représentant une variation déterminée à l'avance des valeurs de mesure de processus.

2. Appareil (9) d'automatisation, qui est constitué pour effectuer un procédé suivant la revendication 1.

3. Système (3) de conduite d'une installation d'un processus, qui a un appareil (9) d'automatisation suivant la revendication 2.
